# EUROPEAN PATENT APPLICATION

(11) **EP 1 122 630 A2**
(43) Date of publication of application: **08.08.2001**
(21) Application number: 00119848.0
(22) Date of filing: 12.09.2000
(51) Int. Cl.: G06F 1/18

(54) **Computer housing for inserting and isolating a main board**

(30) Priority: 02.02.2000 KR 0005190
(71) Applicant: Interdeo Co., Ltd., Seoul (KR)
(72) Inventor: Choi, Hong Sun, Kwang-Ju City (KR); Nha, Eun Kyung, Kwang-Ku City (KR)
(74) Representative: Urner, Peter, Dipl.-Phys.

(57) **Abstract**

Disclosed is a computer inserting and isolating main board, in which a main board section (1) is detachably inserted in a casing (4), and various signal cables connected to the main board section (1) are received in a predetermined space in the main board section (1), thereby providing convenience in maintaining and replacing the elements and improving the aesthetic value of the external appearance of the computer. In the computer, a main board section (1) has guide rails (3), and a casing (4) has at least one cable hole through which signal cables and electric power cables extending from peripheral equipments are inserted. The casing (4) has guide members (5) slidably engaged with the guide rails (3), so that the main board section (1) can be slid into the casing (4). A multiple tap (14) having at least five electric nodes is provided at the casing (4) and has a power-in connector (15) for simultaneously cutting off electric power being applied to the peripheral equipments when operation of the computer is ended.

## Description

### BACKGROUND OF THE INVENTION

### Field of the Invention

The present invention relates to a computer having a detachably inserted main board, and more particularly to a computer, in which a main board section containing elements of a main frame is detachably inserted in a casing, and a storage drawer is disposed under the main board section, thereby providing convenience in maintaining and replacing the elements and improving the aesthetic value of the external appearance of the computer.

### Description of the Related Art

In general, when a computer, especially a personal computer is used in an office, it is usual that a main frame, a monitor, a keyboard, and a mouse of the computer are not put on a specific desk for a computer, but on a general office desk, in order to increase the availability of space in the office.

Accordingly, the computer takes a large portion of the working space on the desk away from a worker and provides inconvenience for the worker when the worker performs labor without operating the computer. Further, since various documents, books, writing materials, and so on, besides the peripheral elements of the computer, are usually put on the desk, the peripheral equipments of the computer help to make the external appearance of the desk and the computer look unorganized and untidy.

Further, in order to use the computer, an electric power cable should be connected to each of the peripheral equipments such as a monitor, a printer, a scanner, and a speaker, and various signal cables should be connected between the main frame and the peripheral equipments. Accordingly, these cables deteriorate the aesthetic value of the external appearance of the desk and the computer.

In order to overcome these problems, a computer-integrated type desk, in which a computer is integrally assembled with a desk, is currently shown in the market. However, although the computer-integrated type desk has an advantage in that the space on a top plate of the desk can be effectively utilized, it is disadvantageous because the entire set of the desk and the computer should be simultaneously purchased, which imposes a relatively heavy financial burden on the purchaser. Further, this computer-integrated type desk still does not overcome the deterioration of the external aesthetic value due to the electric power cables and the signal cables.

Meanwhile, when the computer is out of order, the casing of the main frame should be separated so as to repair or replace the elements mounted to the main board, and the casing should be assembled and fixed again to the main frame after the maintenance or the replacement is completed. These separation and assemblage of the casing provide further inconvenience for the user.

### SUMMARY OF THE INVENTION

Accordingly, the present invention has been made in an effort to solve the problems occurring in the related art, and it is an object of the present invention to provide a computer having a detachably inserted main board, in which a main board section containing elements of a main frame such as a power supply, a main board, a hard disc drive, a floppy disc drive, a compact disc drive, various drive adapters, and extension bays, is detachably inserted in a casing, and various signal cables connected to the main board section are received in a predetermined space in the main board section, thereby providing convenience in maintaining and replacing the elements and improving the aesthetic value of the external appearance of the computer.

It is another object of the present invention to provide a computer having a detachably inserted main board, which has a storage drawer for storing various discs, writing materials, and tools, the storage drawer being inserted in a space under a main board section, thereby providing convenience in using the computer and storing the materials, and providing effectiveness in using the space of the desk.

In accordance with one aspect of the present invention, there is provided a computer having a detachably inserted main board, the computer comprising: a main board section having a mounting space for receiving operation elements of the computer, the main board section having guide rails disposed at lateral sides of the main board section outside of the mounting space; a casing having at least one cable hole through which signal cables and electric power cables extending from peripheral equipments of the computer are inserted, the casing having guide members disposed at inner lateral sides of the casing, the guide rails of the main board section being slidably engaged with guide members, so that the main board section can be slid into the casing by means of an engagement between the guide rails and the guide members; and a multiple tap provided at the casing, the multiple tap having at least five electric nodes through which electric power is supplied to the main board section and the peripheral equipments, the multiple tap having a power-in connector for simultaneously cutting off electric power being applied to the peripheral equipments when operation of the computer is ended.

### BRIEF DESCRIPTION OF THE DRAWINGS

The above objects, and other features and advantages of the present invention will become more apparent after a reading of the following detailed description when taken in conjunction with the drawings, in which:
FIG. 1 is a schematic perspective view of a computer having a detachably inserted main board according to an embodiment of the present invention;
FIGs. 2A, 2B, and 2C are respectively an exploded perspective view, a rear view, and a side sectional view of a main board section employed in the computer shown in FIG. 1;
FIGS. 3A, 3B, and 3C are respectively a perspective view, a side sectional view, and a longitudinal sectional view of a casing employed in the computer shown in FIG. 1;
FIG. 4 is a plan view for showing the connection between the first and the second signal connectors employed in the computer shown in FIG. 1;
FIGs. 5A, and 5B are respectively a perspective view and a side sectional view of a storage drawer employed in the computer shown in FIG. 1; and
FIGs. 6A, 6B, and 6C are perspective views for showing various used states of the computer shown in FIG. 1, in relation to a desk.

### DETAILED DESCRIPTION OF PREFERRED EMBODIMENTS

The above and other objects, characteristics, and advantages of the present invention will become apparent from the following description of the preferred embodiment of the present invention, with reference to the accompanying drawings.

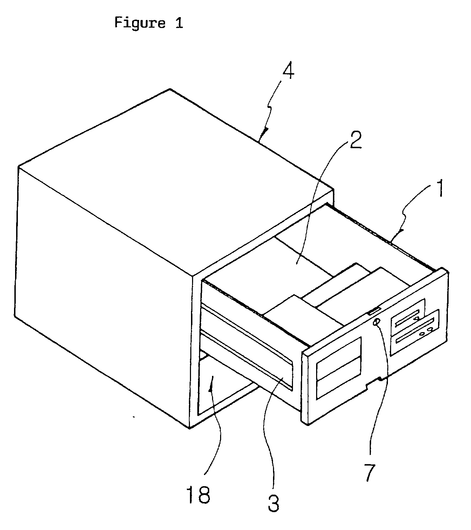

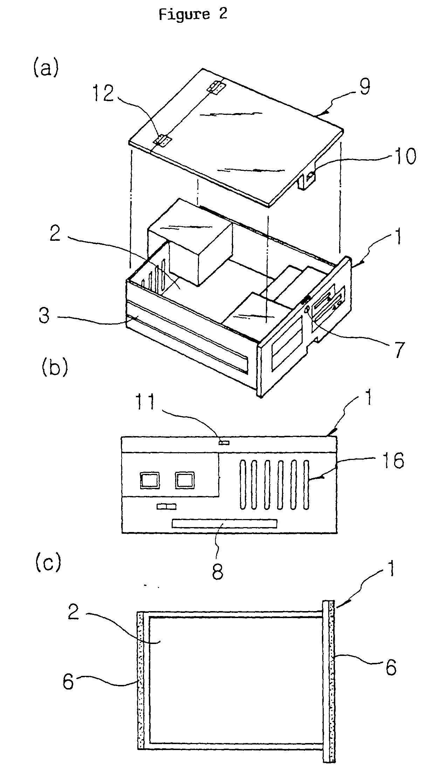

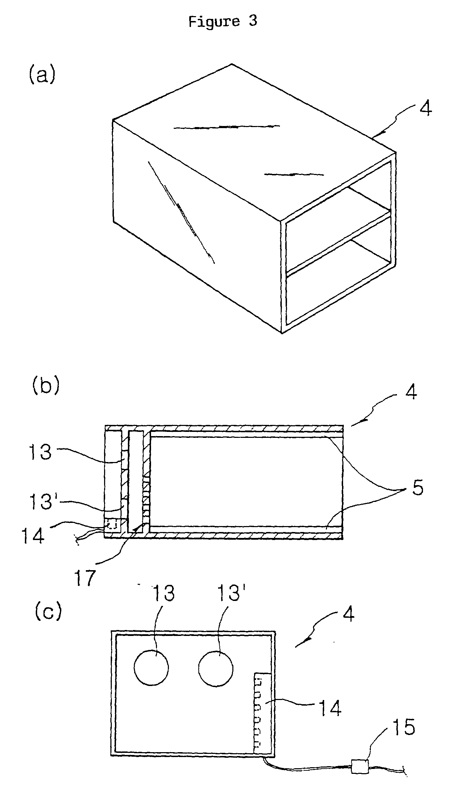

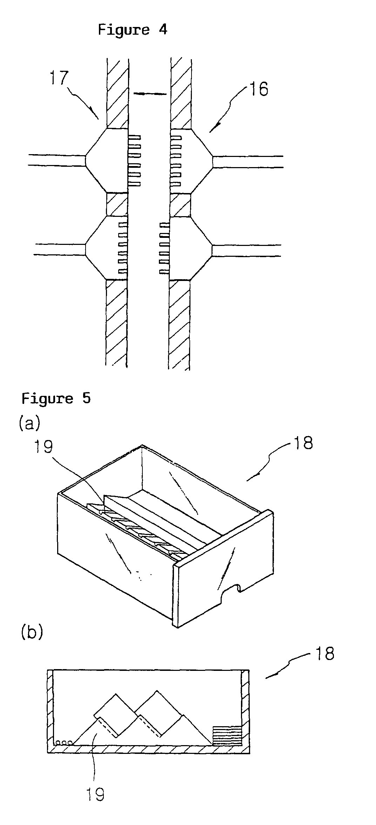

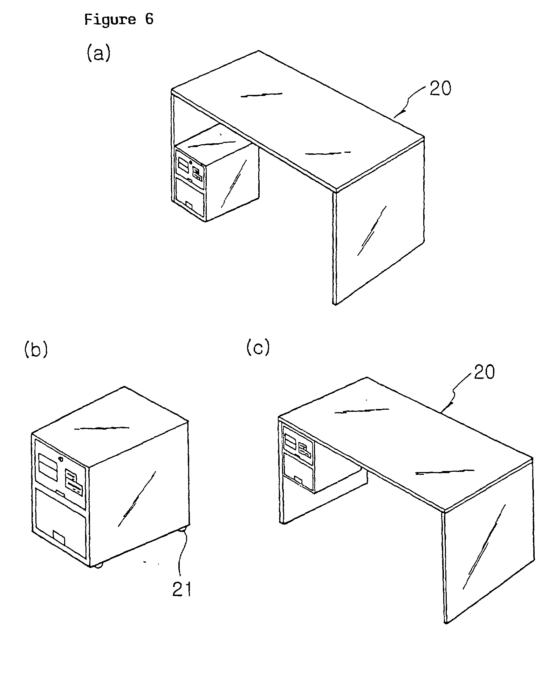

FIG, 1 is a schematic perspective view of a computer having a detachably inserted main board according to an embodiment of the present invention, FIGs. 2A, 2B, and 2C are detailed views of a main board section, FIGs. 3A, 3B, and 3C are detailed views of a casing, FIG. 4 is a plan view for showing the connection between the first and the second signal connectors, FIGs. 5A, and 5B are detailed views of a storage drawer, and FIGs. 6A, 6B, and 6C are perspective views for showing various used states of the computer shown in FIG. 1, in relation to a desk.

In a computer having a detachably inserted main board according to an embodiment of the present invention as shown in FIG. 1, a main board section 1, which functions as an operating section of the computer, is detachably inserted in a casing 4, so that various cables, such as electric power cables and signal cables, to be connected to various elements mounted to the main board section 1 can be organized at a standstill, thereby providing convenience in maintaining and replacing the elements and simultaneously improving the aesthetic value of its external appearance.

Referring to FIGs. 2A to 3C, in the computer having a detachably inserted main board according to an embodiment of the present invention, various operation elements are mounted to the main board section 1 in such a manner that they are arranged in a mounting space 2 defined in the main board section 1, and guide rails 3 are provided at lateral sides of the main board section 1 outside of the mounting space 2. The guide rails 3 are slidably engaged with guide members 5 provided at inner lateral sides of the casing 4, so that the main board section 1 can be slid into the casing 4 by means of the engagement between the guide rails 3 and the guide members 5. The mounting space 2 may be formed by marking a rectangular line on a steel plate and bending the steel plate along the rectangular line at a right angle. Otherwise, the mounting space 2 may be formed by fabricating woods, plastic plates, or their mixture by driving nails into them.

In the case of the above construction in which the main board section 1 is detachably inserted in the casing 4, there is provided convenience in maintaining and replacing the elements of the computer. Especially when the computer is to be sent to a distant maintenance area due to its breakdown, only the main board section 1 can be carried after being easily separated from the casing 4.

In this case, reinforcement members 6 are attached to front and rear surfaces of the main board section 1, so as to reinforce the strength thereof. As the reinforcement members 6, an S-wood, which is made from mixed material of plastic and wood, a medium density fiber board (MDF) made of compressed sawdust, or a plywood may be employed. Among them, it is preferred to employ the S-wood having superior strength and elasticity. Also, the main board section 1 may have a locking key 7, so as to prevent the main board section 1 from being stolen. A grip 8 may be formed at the rear surface of the main board section 1 to thereby provide convenience in carrying the main board section 1.

Further, a cover 9 is provided to cover the main board section 1, so as to shield the harmful electromagnetic waves from the main board section 1 while preventing foreign material such as dust from being introduced into the main board section 1. The rear end of the cover 9 is fixed to the rear end of the main board section 1, and an engagement protuberance 10 and an engagement groove 11, which constitute engagement means, are respectively disposed at the front end of the cover 9 and the contact portion of the main board section 1. Hinges 12 are disposed at a middle portion of the cover 9, so as to selectively open the main board section 1. Accordingly, in the case of maintaining or replacing the elements, the main board section 1 is drawn out of the casing 4 and the engagement of the cover 9 is released, and then the front portion of the cover 9 can be pivoted about the hinges 12, so that the main board section 1 is opened. Again, the front portion of the cover 9 is pivoted back in the opposite direction and then is pressed, the engagement protuberance 10 is inserted in and engaged by the engagement groove 11, so that the cover 9 is fixed.

In the meantime, vatious signal cables extending from various peripheral equipments such as a monitor, a keyboard, and a mouse are connected to the main board section 1, and various electric power cables for supplying electric power to the peripheral equipments are connected to the peripheral equipments. In this case, when the signal cables and the electric power cables are not organized, but scattered, the external appearance of the computer is not so good and its aesthetic value is deteriorated.

The present invention improves the aesthetic value of the computer by properly treating the cables. In order to achieve this advantageous effect, two cable holes 13 and 13' are formed at the rear surface of the casing 4, so that a main power cable, and signal cables and electric power cables from the various peripheral equipments can be inserted through the cable holes 13 and 13'. Further, a multiple tap 14 having at least five connecting nodes is employed so as to supply main electric power and electric power to the peripheral equipments. Moreover, at the electric power cable to the multiple tap 14 is provided a power-in connector 15, which simultaneously cuts off the electric power being applied to the various peripheral equipments when the computer is off.

Therefore, since the electric power cables from the peripheral equipments can respectively be connected to the connecting nodes of the multiple tap 14, only one power cable connected to the multiple tap 14 will do outside of the casing 4, thereby making the external appearance of the computer look organized. Further, the signal cables from the peripheral equipments are introduced through the cable holes 13 and 13' and connected to the main board section 1, to thereby make the external appearance of the computer also look organized. A signal cable from the main board section 1 is connected to the power-in connector 15 provided at the electric power cable to the multiple tap 14, so that the electric power being applied to the entire peripheral equipments can be automatically cut off when the operation of the operating system of the computer is ended. In result, there is provided an additional advantage of reducing the power consumption.

In this case, the signal cables introduced into the main board section 1 from the peripheral equipments may be directly coupled to connectors disposed at the rear surface of the main board section 1 as those in the existing computers. In this case, the construction does not require additional expense and additional elements. Otherwise, as shown in FIG. 4, at the rear surface of the main board section 1 is disposed a first signal connector 16 for transmitting various signals to and from the peripheral equipments, to which are connected signal cables and connectors from the main board section 1. Further, at the inner surface of the rear end of the casing 4 is disposed a second signal connector 17, which is aligned with the first signal connector 16 so as to be coupled to the first signal connector 16, and to which signal cables and connectors from the peripheral equipments are connected, likewise in the first signal connector 16. Therefore, the first signal connector 16 and the second signal connector 17 can selectively be coupled to and separated from each other, when the main board section 1 is inserted into and drawn out from the casing 4. In this case, when the main board section 1 is drawn out of the casing 4, the first signal connector 16 is separated from the second signal connector 17, so that there is no untidy signal cable regardless of the insertion and extraction of the main board section 1.

Meanwhile, in the latter case, although the first signal connector 16 and the second signal connector 17 are selectively coupled to and separated from each other according to the insertion and extraction of the main board section 1, a fatal impact can be applied to the computer when the main electric power cable and the phone signal cable are suddenly separated from the main board section 1. Therefore, it is preferred that the main electric power cable and the phone signal cable are connected to the main board section 1 separately from the first signal connector 16 and the second signal connector 17, so as to maintain their constant connection to the main board section 1.

In the meantime, in the case where a floppy disc, a compact disc, a pen, and so forth, which are generally necessary in using the computer, are stored at a location near to the computer, there is provided not only convenience for the user of the computer, but also is eliminated an apprehension in that they may be stolen.

In consideration of this point, the present invention employs a storage drawer 18 disposed at the casing 4 under the main board section 1. Referring to FIG. 5, the storage drawer 18 contains a plurality of inclined compact disc holders 19 for holding compact discs. Floppy discs, pens, tools, and so on may be received in a space in the storage drawer 18, at which the compact disc holders 19 are not disposed.

As shown in FIGs. 6A and 6B, in the computer having a detachably inserted main board having the above construction according to the present invention, the casing 4 may be disposed on a floor while being attached to an inner side surface of a wall of a desk 20, or the casing 4 may have rollers 21 installed to the bottom of the casing 4 so as to be moved easily. Otherwise, as shown in FIG. 6C, the casing 4 may be suspended at a proper position of the inner side surface of the wall of the desk 20 by driving screws through the side walls of the desk 20 and the casing 4.

In the computer according to the present invention as described above, the main board section is detachably inserted in the casing, so that there is provided convenience in maintaining and replacing the elements of the computer. In addition, especially when the computer is to be sent to a distant maintenance area due to its breakdown, only the main board section can be carried after being easily separated from the casing.

Further, in the computer of the invention, the cover is assembled with the main board section so as to cover the main board section, so as to shield the harmful electromagnetic waves from the main board section while preventing foreign material such as dust from being introduced into the main board section. Also, in the case where the grip is formed at the rear surface of the main board section, there is provided further convenience in carrying the main board section.

Moreover, in the case where the casing employs at least one cable hole and a multiple tap, the signal cables can be organized at a standstill, thereby improving aesthetic value of its external appearance.

While there have been illustrated and described what are considered to be preferred specific embodiments of the present invention, it will be understood by those skilled in the art that the present invention is not limited to the specific embodiments thereof, and various changes and modifications and equivalents may be substituted for elements thereof without departing from the true scope of the present invention.

## Claims

1. A computer inserting and isolating main board, the computer comprising:
a main board section having a mounting space for receiving operation elements of the computer, the main board section having guide rails disposed at lateral sides of the main board section outside of the mounting space;
a casing having at least one cable hole through which signal cables and electric power cables extending from peripheral equipments of the computer are inserted, the casing having guide members disposed at inner lateral sides of the casing, the guide rails of the main board secticn being slidably engaged with guide members, so that the main board section can be slid into the casing by means of an engagement between the guide rails and the guide members;
a multiple tap provided at the casing, the multiple tap having at least five electric nodes through which electric power is supplied to the main board section and the peripheral equipments, the multiple tap having a power-in connector for simultaneously cutting off electric power being applied to the peripheral equipments when operation of the computer is ended;
a cover for covering the main board section, so as to shield the harmful electromagnetic waves from the main board section while preventing foreign material from being introduced into the main board section, the cover being disposed on the main board section, the cover having a rear end fixed to a rear end of the main board section and hinges disposed at a middle portion of the cover, so that a front portion of the cover can be pivoted about the hinges, thereby selectively opening the main board section;
an engagement means for assembling a front portion of the cover with a front end of the main board section, the engagement means including an engagement protuberance and an engagement groove respectively disposed at the front end of the cover and the front end of the main board section; and
a grip formed at a rear surface of the main board section to thereby provide convenience in carrying the main board section.

2. A computer as claimed in claim 1, wherein the main board section comprises a first signal connector disposed at a rear surface of the main board section so as to transmit signals to and from peripheral equipments, and the casing comprises a second signal connector disposed at an inner surface of a rear end of the casing, the first signal connector being connected to signal cables and connectors from the main board section, the second signal connector being connected to signal cables and connectors from the peripheral equipments, the second signal connector being aligned with the first signal connector so as to be selectively coupled to and separated from the first signal connector, the main board section being constantly connected to a main electric power cable and a phone signal cable regardless of the first and the second signal connectors.

3. A computer as claimed in claim 1, the computer further comprising a storage drawer disposed under the main board section, which is detachably inserted into the casing.

4. A computer as claimed in claim 1, wherein the main board section comprises reinforcement members attached to front and rear surfaces of the main board section, so as to reinforce the strength of the main board section.

5. A computer as claimed in claim 1, wherein the main board section comprises a locking key disposed at a rear surface of the main board section, so as to prevent the main board section from being stolen.
